# EUROPEAN PATENT APPLICATION

(11) **EP 2 302 960 A1**
(43) Date of publication of application: **30.03.2011**
(21) Application number: 09171262.0
(22) Date of filing: 24.09.2009
(51) Int. Cl.: H04W 4/06

(54) **A counting method for heterogeneous system broadcast**

(71) Applicant: NEC Corporation, Minato-ku Tokyo 108-8001 (JP)
(72) Inventor: Mouhouche, Belkacem, 91300 Massy (FR); Marchand, Pierre, 75009 Paris (FR)
(74) Representative: Ilgart, Jean-Christophe

(57) **Abstract**

The invention relates to a method of transmitting a broadcast service in a heterogeneous Network supporting several Radio Access Technologies (RAT's), and serving User Equipments (UE's) which have various RAT capabilities and preferences, said method comprising the following steps:
- counting of the UE's before the start of each broadcast session to determine the number of UE's interested in the broadcast service,
- gathering said User Equipments preference/capabilities in terms of RAT so that the heterogeneous Network can broadcast services on a specific RAT or on selected RAT's optimizing the use of the spectrum.

## Description

### TECHNICAL DOMAIN

The invention pertains to the telecommunication field and concerns a method of transmitting a broadcast service in a heterogeneous Network supporting several Radio Access Technologies (RAT's), and serving User Equipments (UE's) which have various RAT capabilities and preferences.

The invention also concerns gateway broadcasting in a heterogeneous Network supporting several Radio Access Technologies (RAT's), and serving User Equipments (UE's) which have various RAT capabilities and preferences.

The invention also concerns a User Equipment (UE) having various RAT capabilities and preferences for receiving broadcast service in a heterogeneous Network supporting several Radio Access Technologies (RAT's).

### STATE OF PRIOR ART

A technical problem results from the fact that in the context of transmission of broadcast services in future heterogeneous Networks, since the heterogeneous Networks will very likely implement a wide range of Radio Access Technologies, and since the User Equipments may be partially or totally compliant with these RAT's and may have particular preferences, the Networks cannot decide on which RAT(s) the broadcast service will be provided while optimizing the use of the spectrum.

The invention aims at helping the heterogeneous Networks to decide on which RAT(s) the broadcast service will be provided.

### PRESENTATION OF THE INVENTION

This object is achieved by means of a method of transmitting a broadcast service in a heterogeneous Network supporting several Radio Access Technologies (RAT's), and serving User Equipments (UE's) which have various RAT capabilities and preferences.

The method according to the invention comprises the step of:
- counting the UE's before the start of each broadcast session to determine the number of UE's interested in receiving the broadcast service,
- gathering said User Equipments preference/capabilities in terms of RAT so that the heterogeneous Network can broadcast services on a specific RAT or on selected RAT' s optimizing the use of said heterogeneous Network resources.

According to another aspect of the invention, said User Equipments transmit to the heterogeneous Network an uplink signal conditionally to a given probability to avoid collision and overloading between different User Equipment responses.

The heterogeneous Network estimates the number of User Equipment interested in receiving the broadcast service by combining the number of responses and said probability.

The heterogeneous Network then broadcasts the service over a specific RAT if the number of User Equipments interested in receiving said service over said specific RAT is higher than a predetermined threshold.

For example, if only a minority of UE's is interested in receiving the service over a specific RAT, the heterogeneous Network can decide to re-direct the broadcasting to a different RAT. Basically for a RAT currently used for the broadcasting to be re-selected, it has to have a number of UE's interested in receiving the proposed service higher than the predetermined threshold. Otherwise, the broadcasting of the proposed service to the UE' s is made through other RATs. This is done by sending broadcast control information indicating the RAT(s) chosen for the broadcasting.

The method according to the invention is implemented in a gateway comprising:
- means for counting the UE' s before the start of each broadcast session to determine the number of UE's interested in receiving the broadcast service,
- means for gathering said User Equipments preference/capabilities in terms of RAT so that the heterogeneous Network can broadcast services on a specific RAT or on selected RAT' s optimizing the use of the spectrum.

The User Equipment receiving services broadcast by said heterogeneous Network comprise:
- means for generating an uplink signal conditionally to a given probability to avoid collision and overloading between different User Equipment responses,
- means for transmitting to said heterogeneous Network the uplink signal along with capabilities and preferences so that the heterogeneous Network can broadcast services on a specific RAT or on selected RAT's optimizing the use of the spectrum.

### BRIEF DESCRIPTION OF THE FIGURES

The forgoing summary, as well as the following detailed description, will be better understood when read in conjunction with the appended figure illustrating an exemplary embodiment of the invention in which:

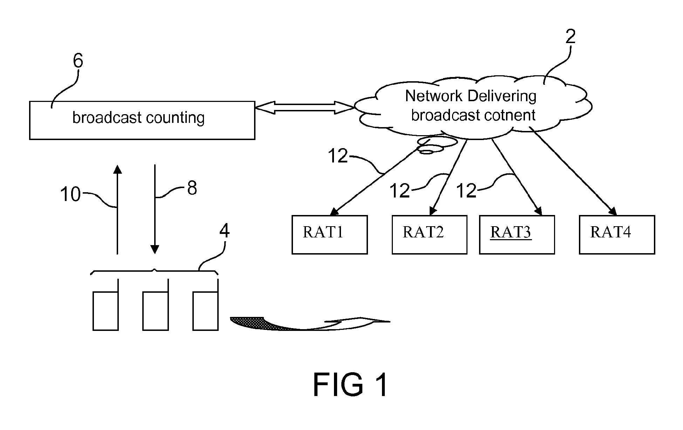

- Figure 1 schematically illustrates an heterogeneous Network delivering broadcast content to UE's according to the invention,
- Figure 2 is a flow chart illustrating the steps of a method according to the invention;

### DESCRIPTION OF A DETAILED EMBODIMENT OF THE INVENTION

The invention will be described in the context of the transmission of broadcast services from a heterogeneous Network 2 supporting several Radio Access Technologies (RAT's) RAT1, RAT2, RAT3, RAT4 to a plurality of UE's 4 having various RAT capabilities and preferences for receiving said broadcast services.

Before broadcasting a service, a gateway 6 of the heterogeneous Network 2 transmits (arrow 8) to the UE's 4 a counting signal in order to know which UE's are interested in receiving the broadcast service. The counting signal is transmitted from the Heterogeneous Network 2 to the UE's 4 through an out-band channel accessible by all the UE's 4 and purposely designed for the counting, or through a channel of one of the heterogeneous Network's RATs supported by all the UE's 4.

Preferably, said out-band channel is a CPC (cognitive pilot channel).

Upon reception of the counting signal, each UE 4 transmits (arrow 10) to the gateway 6 a response indicating whether it is interested in receiving the broadcast service or not.

To achieve this purpose, each UE 4 comprises means for generating an uplink signal in response to the counting signal and means for transmitting said uplink signal to the gateway 6 along with its capabilities and RAT preferences.

To avoid collision and overloading, each uplink signal is made conditionally to a given probability to differentiate the different responses.

Upon reception of the UE's responses, the gateway 6 estimates the number of UE's interested in receiving the broadcast service by combining the number of responses and said probability.

The heterogeneous Network 4 can then decide to broadcast the service using the RAT used by the maximum number of UE's. Basically a RAT currently used by the Heterogeneous Network 4 will be re-selected if the number of interested UE's is higher than a predetermined threshold. Otherwise, the broadcasting of the proposed service is made through other RATs. This is done by sending (arrow 12) from the gateway 6 to the UE's 4 broadcast control information indicating the RAT(s) chosen for the broadcasting. Similarly to the counting signal, the broadcast control information is sent either on a RAT common to all users or on an out-band channel that all users can access.

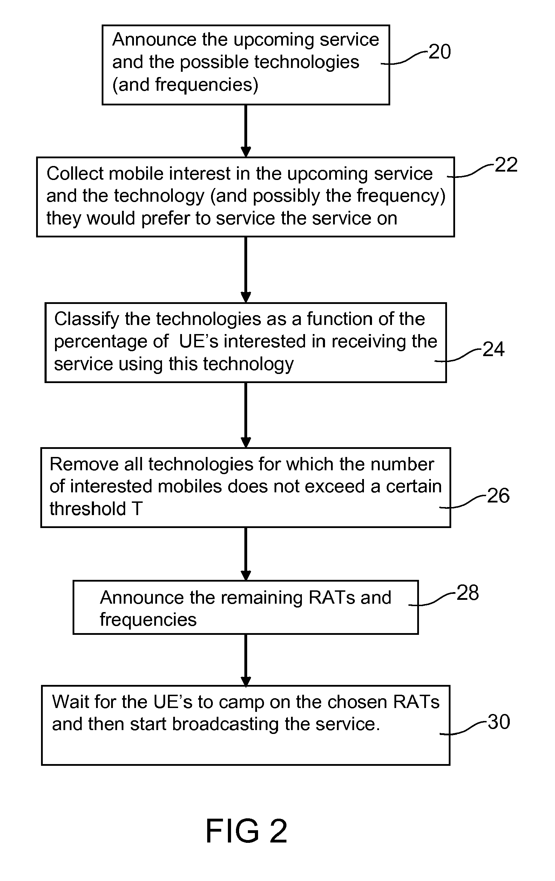

Figure 2 illustrates the main steps of a preferred embodiment of the invention.

At step 20, the heterogeneous Network 2 announces to the UE's 4 the upcoming service and the possible technologies and frequencies.

At step 22, the gateway 6 collects UE's interest in the upcoming service and the technology, and possibly the frequency, they would prefer for receiving the service on.

At step 24, the gateway 6 classifies the technologies as a function of the percentage of UE's interested in receiving the service using this technology.

At step 26, said gateway 6 removes all technologies for which the number of interested UE's does not exceed a given threshold T.

At step 28, the gateway 6 announces the remaining RATs and frequencies.

At step 30, the heterogeneous Network 2 waits for the UE's 4 to camp on the chosen RATs and then start broadcasting the service.

## Claims

1. A method of transmitting a broadcast service in a heterogeneous Network (2) supporting several Radio Access Technologies (RAT's), and serving User Equipments (UE's) (4) which have various RAT capabilities and preferences, said method comprising the following steps:
- counting (8) the (UE's) before the start of each broadcast session to determine the number of UE's (4) interested in the broadcast service,
- gathering said UE's preferences/capabilities in terms of RAT so that the heterogeneous Network (2) can broadcast services on a specific RAT or on selected RAT's optimizing the use of said heterogeneous Network (2) resources.

2. A method according to claim 1 wherein the counting is performed by means of a counting signal transmitted to the UE's (4) by a gateway (6) of said heterogeneous Network (2).

3. A method according to claim 1 wherein the counting signal is transmitted on an out-band channel accessible by all the UE's (4) and purposely designed for the counting.

4. A method according to claim 1 wherein the counting signal is transmitted through a channel of one of the heterogeneous Network's (2) RATs supported by all the UE' s (4).

5. A method according to claim 3 wherein said Out-band channel is a CPC (cognitive pilot channel).

6. A method according to claim 3 wherein said UE's (4) transmit to the Heterogeneous Network (2) an uplink signal conditionally to a given probability to avoid collision and overloading between different UE's (4) responses.

7. A method according to claim 5 wherein the heterogeneous Network (2) estimates the number of UE's (4) interested in receiving the proposed service by combining the number of responses and said given probability.

8. A method according to claim 7 wherein the heterogeneous Network (2) broadcasts the proposed service over a specific RAT if the number of User Equipments interested in receiving said proposed service over said specific RAT is higher than a predetermined threshold.

9. A gateway in a heterogeneous Network (2) supporting several Radio Access Technologies (RAT's), and transmitting a broadcast service to UE's (4) having various RAT capabilities and preferences, **characterized by**:
- means for counting the UE's (4) before the start of each broadcasting session to determine the number of UE's (4) interested in receiving the broadcast service,
- means for gathering said UE's (4) preference/capabilities in terms of RAT so that the heterogeneous Network (2) can broadcast services on a specific RAT or on selected RAT' s optimizing the use of said heterogeneous Network (2) resources.

10. A User Equipment (4) having various RAT capabilities and preferences for receiving services broadcasted by a heterogeneous Network (2) supporting several Radio Access Technologies (RAT's), **characterized by**:
- means for generating an uplink signal conditionally to a given probability to avoid collision and overloading between different User Equipment responses,
- means for transmitting to said heterogeneous Network (2) the uplink signal along with capabilities and preferences so that the heterogeneous Network (2) can broadcast said services on a specific RAT or on selected RAT's optimizing said heterogeneous Network (2) resources.
